(19) Europäisches Patentamt
European Patent Office
Office européen des brevets

(11) **EP 4 015 212 A1**

(12) **EUROPEAN PATENT APPLICATION**
published in accordance with Art. 153(4) EPC

(43) Date of publication:
**22.06.2022 Bulletin 2022/25**

(21) Application number: **20852395.1**

(22) Date of filing: **04.08.2020**

(51) International Patent Classification (IPC):
**B32B 5/18** (2006.01) **B32B 27/00** (2006.01)
**B32B 27/28** (2006.01) **C09J 201/00** (2006.01)
**C09J 7/26** (2018.01) **C09J 7/29** (2018.01)
**C09J 7/38** (2018.01)

(52) Cooperative Patent Classification (CPC):
**B32B 5/18; B32B 27/00; B32B 27/28; C09J 7/26;
C09J 7/29; C09J 7/38; C09J 201/00**

(86) International application number:
**PCT/JP2020/029729**

(87) International publication number:
**WO 2021/029261 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.08.2019 JP 2019149018**

(71) Applicant: **Denka Company Limited
Tokyo 103-8338 (JP)**

(72) Inventors:
• **KIMURA, Akiyoshi
Tokyo 103-8338 (JP)**
• **TATE, Yosuke
Tokyo 103-8338 (JP)**
• **YOSHIMURA, Daisuke
Tokyo 103-8338 (JP)**

(74) Representative: **Beckmann, Claus
Kraus & Weisert
Patentanwälte PartGmbB
Thomas-Wimmer-Ring 15
80539 München (DE)**

(54) **ADHESIVE TAPE**

(57) [Problem] To provide an adhesive tape having a porous substrate, wherein it is possible to suppress bleed-through even when a water-based coating liquid is used as an adhesive, and it is also possible to suppress a decrease in sound absorbing properties and suppress a decrease in adhesiveness between the porous substrate and a primer layer.

[Solution] An adhesive tape comprising a porous substrate having a basis weight of 60-150 g/m$^2$, a thickness of 200 $\mu$m or more, and a void ratio of 35 vol% or more, a resin layer provided to at least one surface of the porous substrate, and an adhesive layer provided on the resin layer, wherein the resin layer is formed from a resin composition (I) including a tackifier resin.

FIG. 1

**Description**

**TECHNICAL FIELD**

The present invention relates to an adhesive tape.

**BACKGROUND**

From the perspective of having sound absorbing properties and being excellent in mechanical strength, typified by tensile strength, porous bodies typified by non-woven fabrics, etc., are used as substrates for adhesive tapes. Adhesive tapes comprising such a porous substrate utilize the sound absorbing properties thereof and are used as adhesive tapes, etc., for bundling electrical wires, and the like.

Methods of producing an adhesive tape include, for example, a method wherein a coating liquid including an adhesive is coated on a surface of a substrate to form an adhesive layer. Known examples of coating liquids include coating liquids which include a solvent such as water or a chemical solvent, etc., and non-solvent-based coating liquids which do not include a solvent. However, when a coating liquid including a solvent is coated on a porous substrate to form an adhesive layer, a phenomenon called "bleed-through" may occur wherein the coating liquid penetrates the substrate and seeps out from the rear surface thereof. Recently, although an increase in environmental awareness has led to a higher demand for water-based coating liquids which include water as a solvent, due to the problem of bleed-through described above, it is considered difficult to apply a water-based coating liquid directly onto a porous substrate.

As a method for preventing the "bleed-through" described above, Patent Document 1, for example, discloses an adhesive tape in which a melt resin layer such as a low-density polyethylene resin (hereinafter described as "LDPE"), or the like, is provided on one side or both sides of a paper substrate having a specific thickness, and an adhesive layer is provided on the melt resin layer. Further, Patent Document 2 discloses a masking tape provided with a primer layer formed from a water-based acrylic emulsion between a porous substrate and an adhesive layer.

**CITATION LIST**

**PATENT LITERATURE**

Patent Document 1: JP 2009-40921 A

Patent Document 2: JP 2017-19920 A

**SUMMARY OF THE INVENTION**

**TECHNICAL PROBLEM**

The method disclosed in Patent Document 1 has a problem in that sound absorbing properties decrease when LDPE, or the like, is applied as a base coat on a surface of a porous substrate such as a non-woven fabric, etc. Further, in the method disclosed in Patent Document 2, there is a problem in that in the case of a porous body having a high void ratio, adhesiveness between a primer layer and a porous substrate decreases and the primer layer peels.

Thus, the present invention addresses a problem of providing an adhesive tape having a porous substrate, wherein even when a water-based coating liquid is used as an adhesive, bleed-through is suppressed, and it is also possible to suppress a decrease in sound absorbing properties and suppress a decrease in adhesiveness between the porous substrate and a primer layer.

**SOLUTION TO PROBLEM**

As a result of diligent research into the problems described above, the present inventors discovered that by providing, to at least one surface of a porous substrate having a specific configuration, a resin layer formed from a resin including a tackifier resin, and further providing an adhesive layer on the resin layer, it is possible to solve all of the problems described above, and thus were led to the completion of the present invention.

That is, the present invention has the following embodiments.

(1) An adhesive tape comprising a porous substrate having a basis weight of 60-150 g/m$^2$, a thickness of 200 $\mu$m

or more, and a void ratio of 35 vol% or more, a resin layer provided to at least one surface of the porous substrate, and an adhesive layer provided on the resin layer, wherein the resin layer is formed from a resin composition (I) including a tackifier resin.

(2) The adhesive tape described in (1), wherein the resin composition (I) includes an ethylene-vinyl acetate copolymer resin.

(3) The adhesive tape described in (1) or (2), wherein the tackifier resin includes at least one resin selected from the group consisting of terpene resins and terpene derivative resins.

(4) The adhesive tape described in any one of (1) to (3), wherein the porous substrate is a non-woven fabric.

**EFFECTS OF INVENTION**

According to the present invention, it is possible to provide an adhesive tape having a porous substrate, wherein even when a water-based coating liquid is used as an adhesive, it is possible to suppress bleed-through, and it is also possible to suppress a decrease in sound absorbing properties and suppress a decrease in adhesiveness between the porous substrate and a primer layer.

**BRIEF DESCRIPTION OF DRAWINGS**

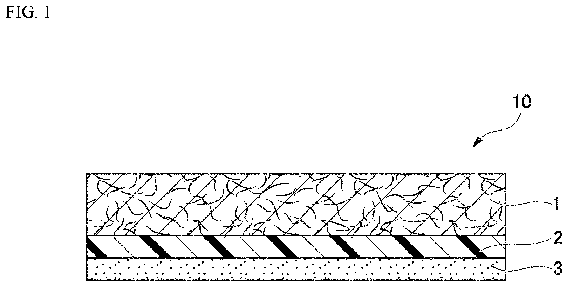

FIG. 1 is a cross-sectional view showing one embodiment of the adhesive tape according to the present invention.

**DESCRIPTION OF EMBODIMENTS**

The present invention shall be explained in more detail below. However, the present invention is not limited to the following embodiments.

[Adhesive tape]

The present invention relates to an adhesive tape comprising a porous substrate having a basis weight of 60-150 g/m$^2$, a thickness of 200 $\mu$m or more, and a void ratio of 35 vol% or more, a resin layer provided to at least one surface of the porous substrate, and an adhesive layer provided on the resin layer, wherein the resin layer is formed from a resin composition (I) including a tackifier resin. By providing a resin layer including a tackifier resin to at least one surface of a porous substrate having a specific configuration such as that described above, and providing an adhesive layer on the resin layer, it is possible to suppress bleed-through even when a water-based coating liquid is used as an adhesive for forming the adhesive layer. Further, an adhesive tape is obtained in which it is possible to suppress a decrease in sound absorbing properties and suppress a decrease in adhesiveness between the porous substrate and the resin layer.

FIG. 1 is a cross-sectional view showing one embodiment of the adhesive tape according to the present invention. An adhesive tape 10 has a resin layer 2 laminated on one surface of a porous substrate 1, and further has an adhesive layer 3 laminated on the resin layer 2.

<Porous Substrate>

The porous substrate of the present invention is a porous substrate having a basis weight of 60-150 g/m$^2$, a thickness of 200 $\mu$m or more, and a void ratio of 35 vol% or more. As long as the effects of the present invention are exhibited, the porous substrate is not particularly limited and examples of such a porous substrate include natural fibers such as wood pulp, cotton, hemp, etc., Japanese paper, crepe paper, craft paper, woven fabric, and non-woven fabric, etc. Particularly preferable among these is non-woven fabric, which easily suppresses a decrease in sound absorbing properties and can be preferably used as a substrate of an adhesive tape for bundling electrical wires, or the like.

The basis weight of the porous substrate is 60-150 g/m$^2$ and more preferably 70-120 g/m$^2$. If the basis weight of the porous substrate is 60 g/m$^2$ or more, sound absorbing properties of the adhesive tape do not decrease. Further, if the basis weight is 150 g/m$^2$ or less, it is possible to suppress a decrease in adhesiveness between the porous substrate and the resin layer.

The thickness of the porous substrate is 200 $\mu$m or more and more preferably 250-350 $\mu$m. By setting the thickness to be 200 $\mu$m or more, it is possible to suppress a decrease in the sound absorbing properties of the adhesive tape. The thickness of the porous substrate indicates a value measured by thickness measurement equipment compliant with a JIS general non-woven fabric testing method (JIS L 1913: 2010).

The void ratio of the porous substrate is 35 vol% or more and preferably 35-70 vol%. By setting the basis weight and the thickness of the porous substrate of the present invention so as to be within the ranges described above, it is possible to suppress bleed-through during formation of the adhesive layer even if the porous substrate has a high void ratio. The void ratio of the porous substrate can be calculated by inputting the measured thickness (t) (cm), the surface area (A) ($cm^2$) of the porous substrate, and the weight (B) (g) of the porous substrate into the following formula (1). Further, in formula (1) below, M represents the density ($g/cm^3$) of the porous substrate.

$$\text{Void ratio (vol\%)} = (1-B/(M \times A \times t)) \times 100 \quad \dots (1)$$

In a preferred embodiment of the present invention, it is particularly preferable to use a non-woven fabric having a void ratio of 35 vol% or more, a basis weight of 60-150 $g/m^2$, and a thickness of 200 $\mu$m or more for the porous substrate. By using such a non-woven fabric as the porous substrate, it is easier to obtain an adhesive tape in which it is possible to suppress a decrease in sound absorbing properties and suppress a decrease in adhesiveness with the resin layer. Further, it becomes easier to suppress bleed-through from the porous substrate.

When a non-woven fabric is to be used as the porous substrate, it is possible to use a non-woven fabric made by a stitch-bond method, a non-woven fabric made by a spun-bond method, a non-woven fabric made by a spun-lace method, or a non-woven fabric made by a melt blowing method, etc. Further, the non-woven fabric may be a single layer and may be a laminated non-woven fabric comprising a plurality of layers. Further, in the case of being a laminated non-woven fabric, non-woven fabrics made by different methods may be laminated therein. Among the foregoing, from the perspective of tensile breaking strength, it is preferable to use a non-woven fabric made by a stitch-bond method or a spun-bond method. By using a porous substrate comprising these non-woven fabrics, it is easier to achieve sound absorbing properties while also maintaining tape strength.

As long as the effects of the present invention are exhibited, the fibers constituting the non-woven fabric are not particularly limited and examples thereof include aramid fibers, glass fibers, cellulose fibers, nylon fibers, vinylon fibers, polyester fibers, polyolefin fibers, and rayon fibers, etc. It is possible to use one of the foregoing alone, and it is also possible to use two or more thereof in combination. Among the foregoing, from the perspective of heat resistance, polyester fibers are preferable.

From the perspective of flexibility and sound absorbing properties, the fiber diameter of the fibers constituting the non-woven fabric is preferably 5-150 $\mu$m and more preferably 10-100 $\mu$m. If the fiber diameter of the non-woven fabric is 5-150 $\mu$m, sound absorbing properties are more likely to be good.

<Resin layer>

The resin layer of the present invention is a layer formed from a resin composition (I) including a tackifier resin. The resin layer is provided to at least one surface of the porous substrate. The resin layer of the present invention is a so-called "primer layer" and by providing a resin layer formed from such a characteristic resin composition (I) to at least one surface of the porous substrate so as to be in contact with the porous substrate, it is possible to suppress bleed-through of an adhesive from the porous substrate.

As described above, sound absorbing properties may decrease when a base coat using a resin such as LDPE, or the like, is applied to a porous substrate such as a non-woven fabric, etc. However, the present inventors found that when the resin layer of the present invention formed from the resin composition (I) including a tackifier resin is provided to a surface of the porous substrate, rather than decreasing, sound absorbing properties improve. This is thought to be because the elasticity of the resin layer improves due to using the resin composition (I) which includes a tackifier resin. Further, when a porous substrate having a high void ratio is used, the adhesiveness between the porous substrate and the resin layer may be problematic. However, by using the resin composition (I) which includes a tackifier resin, it was found that adhesiveness between the resin layer and the porous substrate is greatly improved.

(Resin Composition (I))

The resin composition (I) of the present invention includes a tackifier resin. As long as the effects of the present invention are exhibited, the tackifier resin included in the resin composition (I) is not particularly limited and examples thereof include petroleum-based resins such as aliphatic-based copolymers, aromatic-based copolymers, aliphatic/aromatic-based copolymers, and alicyclic copolymers, etc., coumarone-indene-based resins, terpene resins, terpene derivative resins, rosin-based resins such as rosins, polymerized rosins, and hydrogenated rosins, etc., (alkyl) phenol-based resins, xylene-based resins, or hydrogenated products thereof, etc. It is possible to use one of the foregoing alone, and it is also possible to use two or more thereof in combination. Among the foregoing, from the perspective of thermal stability and weatherability, at least one resin selected from the group consisting of terpene resins and terpene derivative resins is preferably included as the tackifier resin. As the terpene derivative resin, for example, a hydrogenated terpene, terpene phenol, aromatic modified terpene phenol, etc., are preferable.

The content of the tackifier resin in the resin composition (I) is preferably 10-70 mass% and more preferably 30-60 mass% with respect to the total mass of the resin composition (I). If the content of the tackifier resin is 10-70 mass%, it is easy to achieve a balance between adhesive force and holding force.

In one embodiment of the present invention, the resin layer is preferably a layer formed by a hot-melting. In that case, the resin composition (I) is preferably a hot-melt adhesive. Further, the hot-melt adhesive preferably includes a base polymer.

Examples of the base polymer include ethylene-based copolymers such as ethylene-vinyl acetate copolymer resins (hereinafter also described as "EVA") and ethylene-ethyl acrylate copolymer resins (hereinafter also described as "EEA"), etc., olefin-based resins such as polyethylenes (hereinafter also described as "PE"), polypropylenes, amorphous polyalphaolefins (hereinafter also described as "APAO"), etc., synthetic rubbers such as styrene-based block copolymers (for example, styrene-isoprene-styrene-based block copolymers (hereinafter also described as "SIS") and styrene-butadiene-styrene-based block copolymers (hereinafter also described as "SBS")), and hydrogenated products thereof, etc., and polyurethanes, etc. It is possible to use one of the foregoing alone, and it is also possible to use two or more thereof in combination. Among the foregoing, from the perspectives of flexibility and weatherability, the base polymer is preferably PE or EVA, with EVA being more preferable.

In one embodiment of the present invention, when EVA is used as the base polymer, the vinyl acetate content, for example, is preferably 1-45 mass% with respect to the total mass of the EVA. Further, when PE is used as the base polymer, the MFR, for example, is preferably 30 g/10 min. or less.

The content of the base polymer is preferably 40-80 mass% and more preferably 45-70 mass% with respect to the total mass of the resin composition (I). If the content of the base polymer is 40-80 mass%, it is easier to achieve both adhesive force and cohesive force.

Components other than the tackifier resin and the base polymer described above may be included in the resin composition (I) in a range that does not hinder the effects of the present invention. In the case in which the resin composition (I) of the present invention is a hot-melt resin composition, examples of the other components include waxes, plasticizers, ultraviolet absorbers, antioxidants, and fine particle fillers, etc.

Examples of waxes include: synthetic waxes such as Fischer-Tropsch waxes, polyolefin waxes (for example, polyethylene waxes, polypropylene waxes, polyethylene/polypropylene waxes), etc.; petroleum waxes such as paraffin waxes and microcrystalline waxes, etc.; and natural waxes such as castor wax, etc. These waxes may also be modified waxes. Further, it is possible to use one of these waxes alone, and it is also possible to use two or more thereof in combination. Among the foregoing, from the perspective of stability, it is preferable to include a Fischer-Tropsch wax or a polyethylene wax.

When the resin composition (I) includes a wax, the content thereof is preferably 0.1-30 mass%, more preferably 0.1-20 mass%, and particularly preferably 0.5-1.5 mass% with respect to the total mass of the resin composition (I). If the content of the wax is 0.1-30 mass%, tackiness is easily obtained during processing, and processing becomes easier.

A plasticizer is blended with an objective of lowering the melt viscosity of the resin composition (I), imparting flexibility thereto, and improving wetting to an adherend. As long as the effects of the present invention are not hindered, the plasticizer is not particularly limited, and, for example, paraffin-based oils, naphthene-based oils, and aromatic oils, etc., may be selected and used, as appropriate. Further, it is possible to use one of the foregoing alone, and it is also possible to use two or more thereof in combination.

Examples of the ultraviolet absorber include benzotriazole-based ultraviolet absorbers, benzophenone-based ultraviolet absorbers, and lactone-based stabilizers, etc. It is possible to use one of the foregoing alone, and it is also possible to use two or more thereof in combination.

Examples of the antioxidant include phenol-based antioxidants, sulfur-based antioxidants, and phosphorus-based antioxidants, etc. It is possible to use one of the foregoing alone, and it is also possible to use two or more thereof in combination.

Examples of the fine particle filler include mica, calcium carbonate, kaolin, talc, titanium oxide, diatomaceous earth, urea-based resins, styrene beads, calcined clay, and starch, etc. The shape of the foregoing is preferably spherical and the size thereof (diameter in the case of being spherical) is not particularly limited as long as the effects of the present invention are exhibited. Further, it is possible to use one of the foregoing alone, and it is also possible to use two or more thereof in combination.

In one embodiment of the present invention, the thickness of the resin layer is preferably 5-30 $\mu$m and more preferably 10-20 $\mu$m. If the thickness of the resin layer is 5-30 $\mu$m, bleed-through of an adhesive is more easily suppressed.

<Adhesive layer>

The adhesive layer of the present invention is provided on the resin layer. By providing a resin layer on at least one surface of the porous substrate and further providing an adhesive layer on the resin layer, it is possible to suppress bleed-through when forming the adhesive layer. Further, the adhesive layer is preferably provided so as to be in contact with the resin layer.

(Adhesive)

The adhesive layer is a layer formed from an adhesive. As long as the effects of the invention are exhibited, the adhesive for forming the adhesive layer is not particularly limited and it is possible to use, as appropriate, adhesives conventionally used in an adhesive tape. Specifically, it is possible to use, an acrylic adhesive, a rubber-based adhesive, a silicone-based adhesive, or a urethane-based adhesive, etc., as the adhesive.

An adhesive having an acrylic polymer as a main component may, for example, be used as the acrylic adhesive.

Examples of the acrylic polymer include a polymer of a (meth)acrylic acid alkyl ester and a carboxyl group-containing unsaturated monomer, etc.

Examples of a (meth)acrylic acid alkyl ester include methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, and isononyl methacrylate, etc. It is possible to use one of the foregoing alone, and it is also possible to use two or more thereof in combination.

If copolymerizable with the (meth)acrylic acid alkyl ester described above and as long as the effects of the present invention are exhibited, the carboxyl group-containing unsaturated monomer is not particularly limited, and it is possible to use, for example, acrylic acid, methacrylic acid, itaconic acid, fumaric acid, and maleic acid, etc. It is possible to use one of the foregoing alone, and it is also possible to use two or more thereof in combination.

The acrylic polymer may also be configured as a copolymer comprising a monomer other than a (meth)acrylic acid alkyl ester and a carboxy group-containing unsaturated monomer such as that described above.

Examples of the other monomer include hydroxy group-containing monomers such as 2-hydroxyethyl (meth)acrylate, 2-hydroxypropyl (meth)acrylate, and hydroxyhexyl (meth)acrylate, etc., nitrogen-containing (meth)acrylates such as (meth)acrylamide, acryloyl morpholine, and (meth)acrylonitrile, etc., vinyl acetate, styrene, vinylidene chloride, and vinyl propionate, etc. It is possible to use one of the foregoing alone, and it is also possible to use two or more thereof in combination.

Examples of the rubber-based adhesive include adhesives in which at least one tackifier selected from the group consisting of rosin-based resins, terpene-based resins, petroleum-based resins, etc., is blended, as appropriate, in at least one rubber component selected from the group consisting of natural rubber, styrene-isoprene-styrene block copolymers (SIS), styrene-butadiene-styrene block copolymers (SBS), hydrogenated products of the styrene-based block copolymers (SIPS, SEBS), styrene-butadiene rubbers (SBR), polyisoprene rubber (IR), polyisobutylene (PIB), and butyl rubber (IIR), etc.

Examples of the silicone-based adhesive include adhesives in which a silicone resin or a silicone oil, etc., is blended, as appropriate, in a silicone rubber.

Examples of the urethane-based adhesive include adhesives obtained by reacting a polyol such as a polyether-based polyol or a polyester-based polyol, etc., with a polyisocyanate such as tolylene diisocyanate (TDI), methylene diphenyl diisocyanate (MDI), hexamethylene diisocyanate (HDI), or xylylene diisocyanate (XDI), etc.

With respect to the adhesive for forming the adhesive layer, an arbitrary additive may be included in the adhesive described above.

Examples of the additive include softeners, tackifiers, surface lubricants, leveling agents, antioxidants, corrosion inhibitors, photostabilizers, ultraviolet absorbers, thermal stabilizers, polymerization inhibitors, silane coupling agents, lubricants, inorganic and organic fillers, metal powders, and pigments, etc. It is possible to use one of the foregoing alone, and it is also possible to use two or more thereof in combination.

In one embodiment of the present invention, the adhesive for forming the adhesive layer is preferably a water-based adhesive (water-based coating liquid) in which an adhesive component is dispersed in water. As described above, the adhesive tape according to the present invention has a specific resin layer provided to at least one surface of the porous substrate and therefore bleed-through does not readily occur even when a water-based adhesive is used to form the adhesive layer on the porous substrate.

The water-based coating liquid may be prepared by dispersing the adhesives described above in water which serves as a dispersion medium.

In one embodiment of the present invention, the adhesive layer is preferably a layer formed by using a water-based coating liquid in which an acrylic polymer is dispersed in water. Further, as the acrylic polymer, it is possible to use a polymer in which a monomer such as butyl acrylate, 2-ethylhexyl acrylate, or acrylic acid, etc., is polymerized at an arbitrary ratio.

From the perspective of stable coating, the water-based coating liquid preferably has a viscosity of 3,000-9,000 mPa·s/23°C. Further, the viscosity is a value measured using a B-type viscometer, under a condition of 60 rpm using a spindle corresponding to the viscosity.

As long as the adhesive force of the adhesive tape can be sufficiently exhibited, the thickness of the adhesive layer is not particularly limited, and is, for example, preferably 10-60 $\mu$m and more preferably 20-50 $\mu$m.

<Manufacturing process>

The method for manufacturing the adhesive tape according to the present invention includes a process of coating (or applying) the resin composition (I) on at least one surface of a porous substrate to form a resin layer, and coating an adhesive on the resin layer to form an adhesive layer. When the resin composition (I) is a hot-melt adhesive, the resin layer is formed by extruding the holt-melt adhesive (resin composition (I)) from a die to a surface of the porous substrate and cooling. The resin layer may be a single layer and may be a plurality of layers. Further, when the adhesive is a water-based coating liquid, the water-based coating liquid is coated onto the resin layer by roll coating, preferably by a comma coater, to form the adhesive layer.

<Evaluation Methods>

(Evaluation of bleed-through from substrate)

The adhesive tape according to the present invention can prevent bleed-through from the porous substrate during formation of the adhesive layer.

It is possible to evaluate the presence or absence of bleed-through from the porous substrate by following the procedures described below.

A fabricated adhesive tape is immersed in liquid nitrogen for one minute to allow infiltration. Then, the adhesive tape is cut perpendicularly. A cross-section of the adhesive tape is observed with a laser microscope to confirm whether or not the adhesive has infiltrated as far as the rear surface of the substrate.

(Evaluation of sound absorbing properties)

The adhesive tape according to the present invention is provided with a resin layer formed from the resin composition (I) including a tackifier resin and can therefore suppress a decrease in sound absorbing properties.

It is possible to evaluate the sound absorbing properties of the adhesive tape by following the procedures described below.

An aluminum plate having a thickness of 0.3 mm and measuring 350 mm × 190 mm is bent into a semicircular shape with a diameter of 290 mm, and a steel rod with a diameter of 8 mm is dropped from a position 20 mm above the highest point of the aluminum plate at a load of 0.16 N. At that time, sound pressure at impact is measured by a microphone installed 50 mm above the impact position. A sound pressure value measured for the steel rod alone is set as a blank, and a difference between the blank and a sound pressure value measured when one layer of the adhesive tape is attached to the steel rod at the impact position is determined to be a damping value. The greater is the damping value, the more excellent are the sound absorbing properties.

(Evaluation of abrasion resistance)

The adhesive tape according to the present invention is provided with a resin layer formed from the resin composition (I) including a tackifier resin and is therefore also excellent in abrasion resistance.

It is possible to evaluate the abrasion resistance of the adhesive tape by following the procedures described below.

Using a scrape abrasion testing machine (manufactured by Yasuda Seiki Seisakusho, Ltd., Model No. 210, setting conditions: needle diameter: ø 0.45 mm; action speed: 55 cycles/min.; needle movement amount: 20 mm; abrading length: 15.5 mm), abrasion resistance is evaluated in accordance with ISO 6722-1.

The adhesive tape is wound around a stainless steel rod with a diameter of 1 cm, the adhesive tape is scraped by a needle at the tip of a scraper, and the number of cycles until the needle comes into contact with and becomes electrically connected to the stainless steel rod is measured.

(Evaluation of adhesiveness between porous substrate and resin layer)

In the adhesive tape according to the present invention, the adhesive force between the porous substrate and the resin layer does not decrease.

It is possible to evaluate the adhesive force between the porous substrate and the resin layer by following the procedures described below.

In accordance with JIS K 5600 and following the procedures described below, a box-cutter knife is used to penetrate the resin layer and a state when incisions reaching the porous substrate are made in a grid-shape is evaluated. Note that a tape, prior to the adhesive layer being laminated, comprising the porous substrate and the resin layer is used for the measurement samples.

(Procedures)

(1) A box-cutter knife is used to make 11 incisions in the resin layer side of a sample reaching as far as the porous substrate, and thereafter, a change in orientation of 90° is made and 11 further incisions are made. Note that a new blade is always used in the cutter knife.

(2) Adhesive cellophane tape is stuck on the cut resin layer surface so as to adhere to approximately 50 mm and is rubbed with an eraser to adhere the adhesive cellophane tape to the resin layer.

(3) One to two minutes after adhering the adhesive cellophane tape, an edge of the adhesive cellophane tape is held and sharply pulled while keeping at a right angle to the resin layer surface.

(4) The amount of the resin layer that has adhered to the adhesive cellophane tape surface is evaluated on a ten-stage scale to evaluate the adhesiveness between the porous substrate and the resin layer.

(Evaluation of adhesive force)

It is possible to evaluate the adhesive force of the adhesive tape according to the present invention in accordance with, for example, JIS Z 0237: 2009 edition.

[Uses]

As explained above, according to the adhesive tape of the present invention, it is possible to suppress bleed-through from a porous substrate even if the porous substrate, preferably a substrate comprising a non-woven fabric, has a water-based coating liquid applied directly thereon to form an adhesive layer. Further, it is possible to suppress a decrease in sound absorbing properties and suppress a decrease in adhesiveness between the porous substrate and a primer layer. Due thereto, the adhesive tape according to the present invention can be preferably used as, for example, an adhesive tape for bundling electrical wires, or the like, arranged in an engine room, etc., of a vehicle. Naturally, the adhesive tape of the present invention is not limited to a use for bundling electrical wires.

**EXAMPLES**

Examples are provided below to describe the present invention in detail. However, the present invention is not limited by the following descriptions.

[Example 1]

<Preparation of Resin Composition (I)>

A hot-melt adhesive was prepared as the resin composition (I). First, as the base polymer, 40 parts by mass of EVA (product name "Evaflex® EV250", manufactured by Du Pont-Mitsui Polychemicals), as the tackifier resin, 40 parts by mass of a condensed rosin resin (product name "Aradyme® R-95", manufactured by Arakawa Chemical Industries, Ltd.), and 20 parts by mass of a Fischer-Tropsch wax (product name "Sasolwax® HI", manufactured by Sasol Ltd.) were kneaded for one hour in a Teflon® beaker set at 180°C to obtain a hot-melt adhesive. The blend ratios (mass%) of each component in the resin composition (I) are as shown in Table 1.

<Fabrication of adhesive tape>

The hot-melt adhesive obtained as described above was extruded from a die at an extrusion temperature of 180°C onto a porous substrate comprising a stitch-bond non-woven fabric having a basis weight of 70 g/m², a thickness of 280 μm, and a void ratio of 70 vol%, passed through a cooling roll, and wound to form a resin layer on the surface of the porous substrate. The thickness of the resin layer was 20 μm. Next, an adhesive tape was obtained by applying a water-based acrylic adhesive (water-based coating liquid) (product name "BPW 6441", manufactured by Toyochem Co., Ltd.) to the resin layer using a comma reverse coater, drying at 130°C, and forming an adhesive layer having a thickness of 30 μm. The coating amount at that time was 30 g/m². Each of the various properties of the obtained adhesive tape was evaluated following the evaluation methods described below. The results are shown in Table 1.

(Evaluation of bleed-through)

Evaluations were carried out in accordance with the following evaluation method.
A fabricated adhesive tape was immersed in liquid nitrogen for one minute to allow infiltration. Then, the adhesive tape was cut perpendicularly. A cross-section of the adhesive tape was observed with a laser microscope to confirm whether or not the adhesive had infiltrated as far as the rear surface of the porous substrate. Cases in which bleed-through had not occurred were evaluated as a "pass" and cases in which bleed-through had occurred were evaluated as a "fail".

(Evaluation of sound absorbing properties)

Evaluations were carried out in accordance with the following evaluation method.
An aluminum plate having a thickness of 0.3 mm and measuring 350 mm × 190 mm was bent into a semicircular shape having a diameter of 290 mm, and a steel rod with an 8 mm diameter was dropped from a position 20 mm above the highest point of the aluminum plate at a load of 0.16 N. At that time, sound pressure at impact was measured by a microphone installed 50 mm above the impact position. A sound pressure value measured for the steel rod alone was set as a blank, and a difference between the blank and a sound pressure value measured when one layer of the adhesive tape was attached to the steel rod at the impact position was determined to be a damping value. Further, sound absorbing properties were evaluated in line with the evaluation criteria described below.

(Evaluation criteria)

Pass: Damping value is 4.0 dB or more

Fail: Damping value is less than 4.0 dB

(Evaluation of adhesiveness between porous substrate and resin layer)

Evaluations were carried out in accordance with the following evaluation method. Further, among the evaluation criteria described below, C or higher was regarded as a pass.
In accordance with JIS K 5600 and following the procedures described below, a box-cutter knife was used to penetrate the resin layer and a state when incisions reaching the porous substrate were made in a grid-shape was evaluated. Note that a tape, prior to the adhesive layer being laminated, comprising the porous substrate and the resin layer was used for the measurement samples.

(Procedures)

(1) A box-cutter knife was used to make 11 incisions in the resin layer side of a sample reaching as far as the porous substrate, and thereafter, a change in orientation of 90° was made and 11 further incisions were made. Note that a new blade was always used in the cutter knife.

(2) Adhesive cellophane tape was stuck on the cut resin layer surface so as to adhere to approximately 50 mm and rubbed with an eraser to adhere the adhesive cellophane tape to the resin layer.

(3) One to two minutes after adhering the adhesive cellophane tape, an edge of the adhesive cellophane tape was held and sharply pulled while keeping at a right angle to the resin layer surface.

(4) The amount of the resin layer that had adhered to the adhesive cellophane tape surface was evaluated on a ten-stage scale to evaluate the adhesiveness between the porous substrate and the resin layer. The adhesion ratio of the resin layer was evaluated using two-point intervals, with a case in which no resin at all had adhered to the adhesive cellophane tape surface being evaluated as 10 points (A) and a case in which resin had adhered to the entire surface of the adhesive cellophane tape being evaluated as 0 points (D).

Further, the relationship between each score and evaluation symbol is as follows.
A: 10 points, B: 8 points, C: 4-6 points, and D: 0-2 points.

(Evaluation of abrasion resistance)

Evaluations were carried out in accordance with the following evaluation method. Further, cases in which an abrasion resistance repetition number was 100 or more were regarded as a pass.
Using a scrape abrasion testing machine (manufactured by Yasuda Seiki Seisakusho, Ltd., Model No. 210, setting conditions: needle diameter: ø 0.45 mm; action speed: 55 cycles/min.; needle movement amount: 20 mm; abrading length: 15.5 mm), abrasion resistance was evaluated in accordance with ISO 6722-1.
The adhesive tape was wound around a stainless steel rod with a diameter of 1 cm, the adhesive tape was scraped by a needle at the tip of a scraper, and the number of cycles until the needle came into contact with and became electrically connected to the stainless steel rod was regarded as the "abrasive resistance repetition number".

(Evaluation of adhesive force)

The adhesive force of the adhesive tape was evaluated in accordance with JIS Z 0237: 2009 edition. Further, cases in which the adhesive force was 8.0 N/20 mm or more were regarded as a pass.
The constitution of the water-based acrylic adhesive is as described below.
As the acrylic polymer, product name "Oribain® BPW 6441", manufactured by Toyochem Co., Ltd. was used. The viscosity of this water-based coating liquid (B-type viscometer, conditions of 60 rpm) was 6000 mPa·s/23°C.

[Examples 2-9 and Comparative Examples 1-3]

Apart from setting the type of the porous substrate and the constitution of resin composition (I) as shown in Table 1, the adhesive tapes were fabricated using the same method as that of Example 1. Bleed-through, sound absorbing properties, adhesiveness between the porous substrate and the resin layer, abrasion resistance, and adhesive force of the adhesive tape obtained in each example were evaluated by the same methods as Example 1. The results are shown in Tables 1 and 2.
The details of each component in the tables are as described below.

(Porous Substrate)

Stitch-bond non-woven fabric: polyester fibers, fiber diameter 5-100 μm.
Spun-bond non-woven fabric: polyester fibers, fiber diameter 5-100 μm.

(Resin Composition (I))

EVA: product name "Evaflex EV250", manufactured by Du Pont-Mitsui Polychemicals.

PE: product name "NH745", manufactured by Japan Polyethylene Corporation.

Condensed rosin resin: product name "Aradyme® R-95", manufactured by Arakawa Chemical Industries, Ltd.

Hydrogenated rosin: product name "Hypale® CH", manufactured by Arakawa Chemical Industries, Ltd.

Hydrogenated terpene (terpene derivative resin): product name "Clearon® M/K", manufactured by Yasuhara Chemical Co., Ltd.

Terpene phenol (terpene derivative resin): product name "YS Polyster U130", manufactured by Yasuhara Chemical Co., Ltd.

Terpene resin: product name "Resin TO105", manufactured by Yasuhara Chemical Co., Ltd.

Wax (Fischer-Tropsch wax): product name "Sasolwax HI", manufactured by Sasol Ltd.

Further, "water-based acrylic" for the adhesive in the tables indicates the same acrylic adhesive (water-based coating liquid) as that used in Example 1.

[Table 1]

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Porous substriate | Type | | (-) | Stitch-bond non-woven fabric | Stitch-bond non-woven fabric | Stitch-bond non-woven fabric | Stitch-bond non-woven fabric | Stitch-bond non-woven fabric | Stitch-bond non-woven fabric | Spun-bond non-woven fabric | Spun-bond non-woven fabric | Spun-bond non-woven fabric |
| | Basis weight | | (g/m$^2$) | 70 | 100 | 100 | 140 | 100 | 100 | 70 | 100 | 140 |
| | Thickness | | ($\mu$m) | 280 | 380 | 380 | 526 | 380 | 380 | 240 | 360 | 450 |
| | Void ratio | | (vol%) | 70 | 70 | 70 | 70 | 70 | 70 | 60 | 60 | 60 |
| Resin layer (Resin composition (I)) | Base polymer | EVA | (mass%) | 40 | 40 | 40 | 40 | | 40 | 40 | | |
| | | PE | (mass%) | | | | | 40 | | | 40 | 40 |
| | Tackifier resin | Condensed rosin resin | (mass%) | 40 | | | | | | | | |
| | | Hydrogenated rosin | (mass%) | | 40 | | | 40 | | | | |
| | | Hydrogenated terpene | (mass%) | | | | 40 | | | | | |
| | | Terpene phenol | (mass%) | | | | | | 40 | | | |
| | | Terpene resin | (mass%) | | | 40 | | | | 40 | 40 | 40 |
| | Other | Wax | (mass%) | 20 | 20 | 20 | 20 | 20 | 20 | 20 | 20 | 20 |
| | Thickness | | ($\mu$m) | 20 | 20 | 20 | 20 | 20 | 20 | 20 | 20 | 20 |
| Adhesive layer | Adhesive | | (-) | Water-based acrylic | Water-based acrylic | Water-based acrylic | Water-based acrylic | Water-based acrylic | Water-based acrylic | Water-based acrylic | Water-based acrylic | Water-based acrylic |
| | Thickness | | ($\mu$m) | 30 | 30 | 30 | 30 | 30 | 30 | 30 | 30 | 30 |

EP 4 015 212 A1

12

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| Porous substriate | Type | (-) | Stitch-bond non-woven fabric | Stitch-bond non-woven fabric | Stitch-bond non-woven fabric | Stitch-bond non-woven fabric | Stitch-bond non-woven fabric | Stitch-bond non-woven fabric | Spun-bond non-woven fabric | Spun-bond non-woven fabric | Spun-bond non-woven fabric |
| | Basis weight | $(g/m^2)$ | 70 | 100 | 100 | 140 | 100 | 100 | 70 | 100 | 140 |
| | Thickness | $(\mu m)$ | 280 | 380 | 380 | 526 | 380 | 380 | 240 | 360 | 450 |
| | Void ratio | (vol%) | 70 | 70 | 70 | 70 | 70 | 70 | 60 | 60 | 60 |
| Evaluation Results | Bleed-through evaluation | (-) | Pass | Pass | Pass | Pass | Pass | Pass | Pass | Pass | Pass |
| | Sound absorbing properties — Damping value | (dB) | 4.1 | 5.3 | 5.3 | 7.8 | 5.3 | 5.5 | 4 | 5.1 | 7.3 |
| | Sound absorbing properties — Evaluation result | (-) | Pass | Pass | Pass | Pass | Pass | Pass | Pass | Pass | Pass |
| | Adhesiveness between substrate and resin layer — Evaluation result | (-) | B | B | A | C | B | A | B | B | C |
| | Abrasion resistance evaluation — Abrasion resistance repetition number | (times) | 105 | 124 | 130 | 212 | 124 | 144 | 101 | 114 | 183 |
| | Abrasion resistance evaluation — Evaluation result | (-) | Pass | Pass | Pass | Pass | Pass | Pass | Pass | Pass | Pass |
| | Adhesive force evaluation — Adhesive force | (N/20 mm) | 8.4 | 8.4 | 8.4 | 8.4 | 8.4 | 8.4 | 8.4 | 8.4 | 8.4 |
| | Adhesive force evaluation — Evaluation result | (-) | Pass | Pass | Pass | Pass | Pass | Pass | Pass | Pass | Pass |

[Table 2]

| | | | | Comp Ex 1 | Comp Ex 2 | Comp Ex 3 |
|---|---|---|---|---|---|---|
| Porous substrate | Type | | (-) | Stitch-bond non-woven fabric | Stitch-bond non-woven fabric | Stitch-bond non-woven fabric |
| | Basis weight | | (g/m$^2$) | 50 | 160 | 70 |
| | Thickness | | ($\mu$m) | 180 | 580 | 280 |
| | Void ratio | | (vol%) | 70 | 70 | 70 |
| Resin layer (Rersin composition (I)) | Base polymer | EVA | (mass%) | 40 | 40 | 80 |
| | | PE | (mass%) | | | |
| | Tackifier resin | Condensed rosin resin | (mass%) | | | |
| | | Hydrogenated rosin | (mass%) | | | |
| | | Hydrogenated terpene | (mass%) | | | |
| | | Terpene phenol | (mass%) | | | |
| | | Terpene resin | (mass%) | 40 | 40 | |
| | Other | Wax | (mass%) | 20 | 20 | 20 |
| | Thickness | | ($\mu$m) | 20 | 20 | 20 |
| Adhesive layer | Adhesive | | (-) | Water-based acrylic | Water-based acrylic | Water-based acrylic |
| | Thickness | | ($\mu$m) | 30 | 30 | 30 |
| Evaluation results | Bleed-through | evaluation | (-) | Pass | Fail | Fail |
| | Sound absorbing | Damping value | (dB) | 2. 1 | 8.3 | 4. 1 |
| | properties | Evaluation result | (-) | Fail | Pass | Pass |
| | Adhesiveness between substrate and resin layer | Evaluation result | (-) | B | D | D |
| | Abrasion resistance evaluation | Abrasion resistance repetition number | (times) | 36 | 246 | 80 |
| | | Evaluation result | (-) | Fail | Pass | Fail |
| | Adhesive force evaluation | Adhesive force | (N/20 mm) | 8.4 | 8.4 | 8.4 |
| | | Evaluation result | (-) | Pass | Pass | Pass |

As shown in Tables 1 and 2, the adhesive tapes of Examples 1-9 which satisfy the configuration of the present invention did not experience bleed-through even when a water-based coating liquid was used to form the adhesive layer, and were able to suppress a decrease in sound absorbing properties and suppress a decrease in adhesiveness between the porous substrate and the resin layer. Meanwhile, in the adhesive tape of Comparative Example 1, which has a porous substrate with a basis weight of less than 60 g/m$^2$, sound absorbing properties were low. Further, in the adhesive tape of Comparative Example 2, which used a porous substrate having a basis weight exceeding 150 g/m$^2$, bleed-through occurred. Further, adhesiveness between the porous substrate and the resin layer was also low. The reason for the adhesiveness between the porous substrate and the resin layer being low is thought to be that surface unevenness tends to increase when basis weight increases and the non-woven fabric becomes thicker, and due thereto, the adhesiveness between the porous substrate and the resin layer deteriorates. Further, in the adhesive tape of Comparative Example 3, in which the resin layer was formed by a hot-melt adhesive not including a tackifier resin, bleed-through occurred and adhesiveness between the porous substrate and the resin layer was also low. From the above results, it was confirmed that the adhesive tape according to the present invention can suppress bleed-through even when a water-based coating liquid is used as an adhesive, can suppress a decrease in sound absorbing properties, and can suppress a decrease in adhesiveness between the porous substrate and the resin layer.

**REFERENCE SIGNS LIST**

1    Porous Substrate

2    Resin layer

3    Adhesive layer

10   Adhesive tape

**Claims**

1. An adhesive tape comprising

   a porous substrate having a basis weight of 60-150 g/m$^2$, a thickness of 200 $\mu$m or more, and a void ratio of 35 vol% or more,
   a resin layer provided to at least one surface of the porous substrate, and
   an adhesive layer provided on the resin layer,
   wherein the resin layer is formed from a resin composition (I) including a tackifier resin.

2. The adhesive tape according to claim 1, wherein the resin composition (I) includes an ethylene-vinyl acetate copolymer resin.

3. The adhesive tape according to claim 1 or 2, wherein the tackifier resin includes at least one resin selected from the group consisting of terpene resins and terpene derivative resins.

4. The adhesive tape according to any one of claims 1 to 3, wherein the porous substrate is a non-woven fabric.

FIG. 1

**INTERNATIONAL SEARCH REPORT**

| International application No. |
| --- |
| PCT/JP2020/029729 |

A. CLASSIFICATION OF SUBJECT MATTER

B32B 5/18(2006.01)i; B32B 27/00(2006.01)i; B32B 27/28(2006.01)i; C09J 201/00(2006.01)i; C09J 7/26(2018.01)i; C09J 7/29(2018.01)i; C09J 7/38(2018.01)i
FI: C09J7/29; C09J7/26; C09J201/00; B32B27/00 M; B32B5/18; B32B27/28 101; C09J7/38

According to International Patent Classification (IPC) or to both national classification and IPC

B. FIELDS SEARCHED

Minimum documentation searched (classification system followed by classification symbols)
B32B5/18; B32B27/00; B32B27/28; C09J201/00; C09J7/26; C09J7/29; C09J7/38

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2017-031340 A (KYOCERA CORP.) 09 February 2017 (2017-02-09) claim 1, paragraphs [0014]-[0020], [0031], [0036], [0068]-[0073], [0084], example 3, table 1, fig. 1 | 1, 3-4 |
| A | claim 3, paragraphs [0021], [0037] | 2 |
| A | JP 08-302296 A (NICHIBAN CO., LTD.) 19 November 1996 (1996-11-19) entire text | 1-4 |
| A | JP 2014-240457 A (NITTO LIFETECH KK) 25 December 2014 (2014-12-25) entire text | 1-4 |
| A | WO 2013/069784 A1 (KAMOI KAKOSHI CO., LTD.) 16 May 2013 (2013-05-16) entire text | 1-4 |
| A | JP 2002-188068 A (SAIDEN CHEMICAL INDUSTRY CO., LTD.) 05 July 2002 (2002-07-05) entire text | 1-4 |

☐ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 October 2020 (06.10.2020) | 20 October 2020 (20.10.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/029729

| Patent Documents referred in the Report | Publication Date | Patent Family | Publication Date |
|---|---|---|---|
| JP 2017-031340 A | 09 Feb. 2017 | (Family: none) | |
| JP 08-302296 A | 19 Nov. 1996 | (Family: none) | |
| JP 2014-240457 A | 25 Dec. 2014 | (Family: none) | |
| WO 2013/069784 A1 | 16 May 2013 | US 2014/0308482 A1 entire text EP 2778205 A1 CN 103930505 A | |
| JP 2002-188068 A | 05 Jul. 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009040921 A

- JP 2017019920 A